# EUROPÄISCHE PATENTANMELDUNG

(11) **EP 4 830 503 A2**
(43) Veröffentlichungstag der Anmeldung: **28.10.2026**
(21) Anmeldenummer: 26200000.3
(22) Anmeldetag: 07.05.2021
(51) Int. Cl.: A01D 33/04

(54) **HACKFRUCHTERNTEMASCHINE**

(30) Priorität: 07.05.2020 DE 102020112427
(62) Dokumentnummer(n) der früheren Anmeldung(en) nach Art. 76 EPÜ: 21727088.3 / 4 145 976
(71) Anmelder: Grimme Landmaschinenfabrik SE & Co. KG, 49401 Damme (DE)
(72) Erfinder: ROß, Julian, 59889 Eslohe (DE); STROTHMANN, Wolfram, 49078 Osnabrück (DE)
(74) Vertreter: Wischmeyer, André

(57) **Zusammenfassung**

Die Erfindung betrifft eine Hackfruchterntemaschine (2), die eine Zufördervorrichtung (4) zur Förderung von Fördergut aus Erntegut und Beimengen in eine Zuförderrichtung (6) und eine zumindest ein Trennelement (8) aufweisende Trennvorrichtung (10) zum Trennen der Beimengen vom Erntegut umfasst. Die Trennvorrichtung umfasst einen mit einer EDV-Auswerteeinheit gekoppelten und im Betrieb auf das Fördergut, insbesondere auf die Zufördervorrichtung (4), gerichteten Fördergutsensor (12) zur Aufnahme von Fördergutdaten. Erfindungsgemäß umfasst die Trennvorrichtung (10) mehrere, in Zuförderrichtung (6) betrachtet zumindest teilweise nebeneinander angeordnete Trennelemente (8), die von der EDV-Auswerteeinheit in Abhängigkeit von den Fördergutdaten einzeln betätigbar sind.

## Beschreibung

Die Erfindung betrifft eine Hackfruchterntemaschine, umfassend eine Zufördervorrichtung zur Förderung eines Fördergutes aus Erntegut und Beimengen in eine Zuförderrichtung. Außerdem umfasst die Hackfruchterntemaschine eine zumindest ein Trennelement aufweisende Trennvorrichtung zum Trennen der Beimengen vom Erntegut. Die Trennvorrichtung umfasst einen mit einer ersten EDV-Auswerteeinheit gekoppelten und im Betrieb auf das Fördergut gerichteten Fördergutsensor zur Aufnahme von Fördergutdaten. Insbesondere ist der Fördergutsensor im Betrieb auf die Zufördervorrichtung gerichtet. Außerdem ist der Fördergutsensor insbesondere ein optischer Fördergutsensor.

Bei den bekannten Hackfruchterntemaschinen fördert im Betrieb die Zufördervorrichtung das Fördergut zur Trennvorrichtung. Diese wirkt zumindest auf die Beimengen des Fördergutes derart ein, dass diese möglichst vom Erntegut getrennt werden. Die Anwendung des Fördergutsensors ist zur Berechnung von Ernteguterträgen bekannt.

Nachteilig an den bekannten Hackfruchterntemaschinen ist, dass deren Trennvorrichtung, insbesondere bei einem Betrieb der Hackfruchterntemaschine in Hanglagen, zum einen nur einen unzureichenden Anteil der gesamten Beimengen von dem Erntegut trennt und zum anderen unbeabsichtigt auch einen Teil des Erntegutes mit den Beimengen vom restlichen Erntegut trennt oder diesen beschädigt.

Aufgabe der vorliegenden Erfindung ist die Bereitstellung einer Hackfruchterntemaschine und eines Verfahrens zu deren Betrieb, durch die die vorgeschriebenen Nachteile vermieden werden.

Erfindungsgemäß umfasst die Trennvorrichtung mehrere Trennelemente, die in Zuförderrichtung betrachtet zumindest teilweise nebeneinander angeordnet sind. Die Trennelemente sind von der EDV-Auswerteeinheit in Abhängig von den Fördergutdaten einzeln betätigbar.

Eine Hackfruchterntemaschine ist eine selbstfahrende oder im Betrieb von einem Zugfahrzeug gezogene mobile Maschine, die unmittelbar auf dem Acker eingesetzt wird. Die Hackfruchterntemaschine ist insbesondere zur Ernte von Erntegut vorzugsweise in Form von Kartoffeln oder Rüben geeignet. Die Zufördervorrichtung umfasst insbesondere eine Siebband, d. h. ein Förderband mit nicht-geschlossener Auflagefläche, oder ist bevorzugt als Walzentisch ausgebildet.

Der Fördergutsensor ist im Betrieb insbesondere oberhalb des Fördergutes angeordnet, auf das er gerichtet ist. Bevorzugt ist er oberhalb der Zufördervorrichtung angeordnet und weiter vorzugsweise zumindest im Wesentlichen senkrecht auf die Zufördervorrichtung gerichtet. In einer weiteren bevorzugten Ausgestaltung ist der Fördergutsensor auf einen Bereich zwischen der Zufördervorrichtung und einer in Förderrichtung folgenden Fördervorrichtung, insbesondere den Bereich einer Fallstufe, gerichtet. Der Fördergutsensor ist insbesondere als Kamera ausgebildet, bevorzugt als Zeilen-, 2D- oder 3D-Kamera. Insbesondere ist der Fördergutsensor zur Aufnahme von Farbinformationen ausgebildet. Alternativ ist der Fördergutsensor bevorzugt als Ultraschallsensor, Lichtschranke oder dergleichen ausgebildet. Ein Fördergutsensor kann auch eine Kombination mehrerer Sensoren, z.B. einen Bild- und einen Tiefensensor umfassen.

Im Betrieb werden die vom Fördergutsensor aufgenommenen Fördergutdaten an die EDV-Auswerteeinheit übermittelt. Dazu ist der Fördergutsensor insbesondere drahtlos oder kabelgebunden mit der Auswerteeinheit gekoppelt. Die Auswerteeinheit umfasst insbesondere einen Prozessor sowie einen Speicher zur Verarbeitung zumindest der Fördergutdaten. Die Auswerteeinheit ist im Betrieb bevorzugt an der Hackfruchterntemaschine angeordnet, alternativ dazu ist die Auswerteeinheit im Betrieb vorzugsweise an einer mit der Hackfruchterntemaschine gekoppelten Zugmaschine angeordnet.

Die EDV-Auswerteeinheit ist zur separaten Betätigung einzelner Trennelemente ausgebildet. Insbesondere sind die zur Einwirkung auf das Fördergut ausgebildeten Abschnitte der Trennelemente vollständig nebeneinander. Bevorzugt sind die Trennelemente bei einer Betrachtung in eine horizontale und zur Zuförderrichtung rechtwinklige Querrichtung hintereinander angeordnet, so dass insbesondere bei einer übereinstimmenden Stellung der Trennelemente nur das dem Betrachter nächstgelegene sichtbar ist.

Im Betrieb der erfindungsgemäßen Hackfruchterntemaschine ermittelt die EDV-Auswerteeinheit auf Basis der Fördergutdaten die Position von Hackfrüchten und/oder Beimengen, insbesondere deren Position in Querrichtung. Dazu werden insbesondere Identifikationsalgorithmen eingesetzt. Auf Basis der Positionsinformationen und insbesondere der Fördergeschwindigkeit der Zufördervorrichtung berechnet die EDV-Auswerteeinheit, welches Trennelement wann zu betätigen ist, um die Hackfrucht bzw. den Beimengenbestandteil vom weiteren Fördergutstrom zu trennen. Dabei wird das Trennelement betätigt, das eine mit der des zu trennenden Bestandteils übereinstimmende Querrichtungskoordinate hat. Die weiteren Trennelemente können unbetätigt bleiben, um nicht unbeabsichtigt weitere Bestandteile vom Fördergut zu trennen oder Erntegut zu beschädigen.

Durch diesen gezielten Einsatz der Trennelemente wird zum einen erreicht, dass Beimengenbestandteile wie Steine und Kraut gezielter und damit zuverlässiger vom Erntegut zu trennen sind, ohne dass damit unbeabsichtigt getrenntes Erntegut einhergeht. Dadurch wird ein deutlich höherer Wirkungsgrad der Trennvorrichtung gegenüber konventionellen Trennvorrichtungen auf Hackfruchterntemaschinen erreicht.

Die Trennvorrichtung umfasst insbesondere zumindest 3, bevorzugt zumindest 5, besonders bevorzugt zumindest 10, zumindest 30 oder zumindest 50 Trennelemente, in einer vorteilhaften Ausgestaltung der Erfindung hat die Trennvorrichtung bis zu oder genau 60 Trennelemente.Eine Auflagefläche der Zufördervorrichtung hat insbesondere eine in die Querrichtung gemessene Breite von zumindest 500 mm, bevorzugt von zumindest 1.000 mm, besonders bevorzugt von zumindest von zumindest 1.500 mm und/oder bis zu 2.000 mm. Die Anzahl der Trennelemente hängt insbesondere von ihrer Breite und der Breite der Zufördervorrichtung ab. Vorzugsweise hat die Zufördervorrichtung sowohl in die Zuförderrichtung voneinander getrennte als auch quer zur Zuförderrichtung voneinander getrennte Förderparzellen zur Aufnahme je einer Hackfrucht bzw. eines Bestandteils aus den Beimengen. Vorzugsweise ist jeder in die Querrichtung versetzten Parzelle zumindest, insbesondere genau ein Trennelement zugeordnet.

Bevorzugt ist die Trennvorrichtung bezogen auf die Zufördervorrichtung stromabwärts angeordnet. Insbesondere ist die Trennvorrichtung bezüglich einer sich an die Zufördervorrichtung anschließenden, weiteren Fördervorrichtung stromaufwärts angeordnet. Insbesondere ist die weitere Vorrichtung die entlang des Fördergutstroms unmittelbar auf die Zufördervorrichtung folgende. Damit ist die Trennvorrichtung in dieser Ausgestaltungsform der Erfindung im Bereich einer Fallstufe angeordnet, wodurch die Trennelemente während des Fallens der Hackfrüchte bzw. der Beimengenbestandteile auf diese einwirken können. Das ist vorteilhaft, da im Bereich der Fallstufe die Fördergutbestandteile größere Abstände voneinander haben und somit sicher zu erfassen sind, wozu außerdem nur geringe Kräfte durch die Trennelemente aufzubringen sind.

Vorzugsweise sind die Trennelemente derart an einem Trennvorrichtungsrahmen angeordnet, dass sie von einer Ruhestellung in eine Auswerfstellung und zurück beweglich sind. Insbesondere sind die Trennelemente schwenkbar an dem Trennvorrichtungsrahmen angeordnet und/oder haben eine Auswerfoberfläche, die zum Kontakt mit dem zu trennenden Bestandteil in der Auswerfstellung ausgebildet ist. Dabei ist jedem Trennelement zumindest ein Auswerferstellelement zugeordnet. Insbesondere werden die Trennelemente in dieser Ausgestaltung bei ihrer Betätigung von der Ruhestellung in die Auswerfstellung überführt. Dadurch können die Trennelemente im Betrieb Fördergutbestandteile anstoßen oder sie umlenken und sie somit vom restlichen Fördergut trennen. Angesteuert werden von der EDV-Auswerteeinheit insbesondere die Auswerferstellelemente, welche bevorzugt als Hydraulikzylinder, Pneumatikzylinder oder elektrisch zu bewegende Stellelemente ausgebildet sind. Insbesondere umfassen die Trennelemente an ihrer Oberseite ein Schwenklager und sind daran beweglich zu einem Trennvorrichtungsrahmen und/oder einem Maschinenrahmen aufgehängt. Besonders bevorzugt haben die Trennelemente neben der Ruhestellung und der Auswerfstellung weitere Stellungen und bedeutet eine Betätigung der Trennelemente lediglich eine Änderung ihrer Stellung. Auf diese Weise ließe sich insbesondere eine Sortierung etwa von Hackfrüchten unterschiedlicher Größer oder von unterschiedlichen Beimengenbestandteilen vornehmen, dadurch dass diese von den Trennelementen unterschiedlich weitergeleitet werden.

In einer weiteren Ausbildung der Erfindung bilden die Trennelemente jeweils zumindest eine Fluidauslassöffnung aus. Insbesondere haben die Trennelemente dabei jeweils ein betätigbares Fluidstellelement. Insbesondere ist die Fluidauslassöffnung durch eine Düse ausgebildet und/oder zur Ausströmung von Luft geeignet und dazu insbesondere mit einem Druckluftspeicher zu verbinden. Durch die im Betrieb von den getätigten Trennelementen ausgehenden Fluidströme kann insbesondere die Bewegungsbahn bzw. Flugbahn der zu trennenden Bestandteile derart beeinflusst werden, dass diese schonend vom weiteren Fördergut getrennt werden. Die Trennelemente sind dabei insbesondere an einem gemeinsamen Gehäuse oder vorzugsweise einstückig ausgebildet.

Die Fluidstellelemente und/oder die Auswerferstellelemente sind vorzugsweise durch separate Bauteile bzw. Vorrichtungen ausgebildet. Alternativ ist eine Mehrzahl der Fluidstellelemente und/oder der Auswerferstellelemente durch ein gemeinsames Bauteil bzw. eine gemeinsame Vorrichtung zumindest mitausgebildet. Das gemeinsame Bauteil ist insbesondere als im Betrieb Fluid beinhaltende Leitung oder als elektrischer Leiter ausgebildet.

Vorzugsweise hat die Hackfruchterntemaschine zumindest einen Neigungssensor, der insbesondere von der Trennvorrichtung umfasst ist. Der Neigungssensor ist zur Messung einer Neigung der Hackfruchterntemaschine bzw. der Trennvorrichtung und/oder des Zuförderelementes ausgebildet. Außerdem ist der Neigungssensor zur Ausgabe von Neigungsdaten an eine mit dem Neigungssensor gekoppelte EDV-Regeleinheit ausgebildet. Der Neigungssensor ist insbesondere zur Messung einer Neigung gegenüber einer Lotrechten ausgebildet. Der Neigungssensor ist insbesondere drahtlos oder kabelgebunden mit der EDV-Regeleinheit verbunden und übersendet im Betrieb Neigungsdaten an die EDV-Regeleinheit. In einer bevorzugten Ausgestaltung der Erfindung sind die EDV-Auswerteeinheit und die EDV-Regeleinheit von einer übergeordneten EDV-Einheit umfasst oder durch dieselbe EDV-Einheit ausgebildet.

Bevorzugt ist der Neigungssensor zur Messung einer Neigung um eine quer zur Fahrtrichtung orientierte Nickachse und/oder zur Messung einer Neigung um eine in Fahrtrichtung orientierte Rollachse ausgebildet. Die Nickachse ist insbesondere parallel zur Querrichtung. Die Rollachse, und damit auch die Fahrtrichtung, sind insbesondere parallel zur Rollachse. Da die Fördervorrichtungen von Hackfruchterntemaschinen regelmäßig entweder im Wesentlichen in Fahrtrichtung oder im Wesentlichen in Querrichtung fördern, sind die hiermit gemessenen Neigungen die für die Funktion der Hackfruchterntemaschine am relevantesten.

In einer vorteilhaften Ausgestaltung der Erfindung ist die EDV-Regeleinheit zur Einstellung zumindest eines Fahrwerkstellelementes in Abhängigkeit von den Neigungsdaten ausgebildet. Das Fahrwerkstellelement ist zur Verstellung zumindest eines Fahrwerkelementes relativ zum Maschinenrahmen ausgebildet. Das Fahrwerkelement ist insbesondere eine Achse oder ein Radzapfen des Fahrwerkes der Hackfruchterntemaschine. Insbesondere hat die Hackfruchterntemaschine je ein Fahrwerkstellelement pro Fahrzeugseite bzw. pro Rad. Das Fahrwerkstellelement ist insbesondere als Hydraulikzylinder ausgebildet, der vorzugsweise einenends am Maschinenrahmen und anderenends am Fahrwerkelement angeordnet ist.

Durch die Einstellung des Fahrwerkstellelementes in Abhängigkeit von den Neigungsdaten lässt sich sowohl ein Neigungsausgleich um die Rollachse als auch ein Neigungsausgleich um die Nickachse der Hackfruchterntemaschine verwirklichen. Bei mehreren Fahrwerkstellelementen lässt sich zum Ausgleich einer Neigung um die Rollachse insbesondere das Fahrwerkstellelement auf der höher gelegenen Seite der Hackfruchterntemaschine verkürzen, während das gegenüberliegende verlängert wird. Bei einer festgestellten Neigung um die Nickachse der Hackfruchterntemaschine lässt die Neigung sich durch eine synchrone Verkürzung bzw. Verlängerung der Fahrwerkstellelemente derselben Fahrzeugachse beheben. Insbesondere umfasst die Hackfruchterntemaschine ein Aufnahmestellelement, das bei einer Betätigung des Fahrwerkstellelementes die im Betrieb der Hackfruchterntemaschine in den Erdboden eingetauchte Aufnahme mit dem Rodescharen derart gegenüber dem Maschinenrahmen verschwenkt, dass ihre Funktion uneingeschränkt bleibt.

Alternativ oder zusätzlich zum Fahrwerkstellelement ist die EDV-Regeleinheit zur Einstellung zumindest eines Deichselstellelementes in Abhängigkeit von den Neigungsdaten ausgebildet. Das Deichselstellelement ist zur Verstellung eines zum Kuppeln der Hackfruchterntemaschine mit einer Zugmaschine angeordneten Kupplungselementes relativ zum Maschinenrahmen ausgebildet. Insbesondere lässt sich durch das Deichselstellelement eine Zugöse oder ein Kugelkopf der Hackfruchterntemaschine gegenüber ihrem Maschinenrahmen verschwenken oder verschieben, so dass die Höhe des Kupplungselementes verändert wird. Auch durch diese Ausbildung der Erfindung lässt sich ein Neigungsausgleich für den Maschinenrahmen schaffen.

Durch den Neigungsausgleich für den Maschinenrahmen wird erreicht, dass die Funktion der Trennvorrichtung auch bei Geländeneigungen gewährleistet ist. Insbesondere wird dadurch erreicht, dass die Hackfrüchte bzw. die Beimengenbestandteile sich mit einem konstanten Abstand an den Trennelementen in der Ruhestellung vorbeibewegen.

In einer weiteren bevorzugten Ausgestaltung der Erfindung ist die EDV-Regeleinheit zur Einstellung zumindest eines an der Trennvorrichtung angeordneten Trennvorrichtungsstellelementes in Abhängigkeit von den Neigungsdaten ausgebildet. Dabei ist zumindest der Trennvorrichtungsrahmen relativ zum Maschinenrahmen beweglich gelagert. Das Trennvorrichtungsstellelement ist insbesondere an dem Trennvorrichtungsrahmen angeordnet. Der Trennvorrichtungsrahmen ist insbesondere einstückig mit einem Zufördervorrichtungsrahmen oder daran unbeweglich fixiert. Alternativ ist zumindest ein Verschwenken des Trennvorrichtungsrahmens relativ zum Zufördervorrichtungsrahmen um die Rollachse, vorzugsweise um jede Schwenkachse verhindert. Der Zufördervorrichtungsrahmen umfasst insbesondere ein Lagerelement, an dem Umlenkelemente der Zufördervorrichtung drehbar angeordnet sind. Durch das Trennvorrichtungsstellelement wird ein Neigungsausgleich für die Trennvorrichtung geschaffen, ohne dass dafür der gesamte Maschinenrahmen verschwenkt werden muss. Insbesondere wird alternativ der Trennvorrichtungsrahmen verschwenkt. Dazu ist er um die Nickachse und/oder um die Rollachse schwenkbeweglich gelagert. Durch die gemeinsame Verschwenkung vom Trennvorrichtungsrahmen und Zufördervorrichtungsrahmen wird eine gleichbleibende Flugkurve des Fördergutes im Bereich der Trennelemente besonders zuverlässig gewährleistet.

In einer alternativen oder ergänzenden vorteilhaften Ausgestaltung der Erfindung ist der Trennvorrichtungsrahmen relativ zum Zufördervorrichtungsrahmen beweglich gelagert. Durch diese Ausbildung lässt sich eine Anpassung der Trennvorrichtung an unterschiedliche Neigungen verwirklichen, ohne dass dazu der Trennvorrichtungsrahmen bewegt werden muss. Dadurch kann die Zufördervorrichtung zugunsten ihrer Förderfunktion unabhängig von der Neigung eingestellt bleiben, wohingegen die Lage des Trennvorrichtungsrahmens in Abhängigkeit von der Neigung angepasst wird.

Vorzugsweise ist der Trennvorrichtungsrahmen relativ zum Zufördervorrichtungsrahmen zumindest anteilig, insbesondere ausschließlich in eine zur Nickachse parallele Richtung und/oder in die Querrichtung translatorisch beweglich, insbesondere verschieblich gelagert. Durch eine seitliche Verschiebung des Transportvorrichtungsrahmens kann insbesondere auf eine Neigung reagiert werden, die zumindest anteilig um die Zuförderrichtung existiert. Bei Einbau der Trennvorrichtung derart, dass die Zuförderrichtung zumindest anteilig mit der Fahrtrichtung zusammenfällt, kann durch die Verschiebbarkeit des Trennvorrichtungsrahmens in die Querrichtung eine Neigung der Maschine um die Rollachse ausgeglichen werden. Dadurch wird erreicht, dass die Fördergutbestandteile, die durch die Neigung in der Fallstufe einen Bewegungsanteil in Querrichtung haben, trotzdem zuverlässig durch die Trennelemente erreicht werden können.

Alternativ oder zusätzlich ist der Trennvorrichtungsrahmen bevorzugt relativ zum Zufördervorrichtungsrahmen zumindest anteilig, insbesondere ausschließlich, in eine zur Rollachse parallele Richtung, in die Zuförderrichtung und/oder vertikal translatorisch beweglich, insbesondere verschieblich. Durch diese Beweglichkeit lässt sich insbesondere die Nähe des Trennvorrichtungsrahmens und damit auch der Trennelemente zu den Fördergutbestandteilen im Bereich der Fallstufe einstellen. Insbesondere bei einer Neigung um eine zur Querrichtung parallele Achse, insbesondere um die Nickachse, lässt sich somit auf eine steilere bzw. flachere Flugkurve der Bestandteile reagieren und ein konstanter Abstand der Trennelemente in der Ruhestellung zu den Fördergutbestandteilen wahren.

Alternativ oder zusätzlich dazu ist der Trennvorrichtungsrahmen bevorzugt relativ zum Zufördervorrichtungsrahmen zumindest anteilig um eine zur Nickachse parallele Schwenkachse schwenkbar gelagert. Insbesondere ist der Trennvorrichtungsrahmen dabei derart gelagert, dass die durch eine Verschwenkung des Trennvorrichtungsrahmens der Abstand der Trennelemente in der Ruhestellung zur Zufördervorrichtung verändert wird. Ebenso wie die durch die vorgeschriebene Verschiebung des Trennvorrichtungsrahmens lässt sich durch seine Verschwenkung eine Anpassung der Trennvorrichtung an unterschiedliche Flugkurven erreichen.

Vorzugsweise ist die EDV-Regeleinheit zur Einstellung zumindest eines an einem Ableitelement zum Ableiten aussortierter Beimengen von der Trennvorrichtung angeordneten Ableitstellelementes in Abhängigkeit von den Neigungsdaten ausgebildet. Das Ableitelement ist insbesondere unterhalb der Trennelemente und relativ zum Maschinenrahmen beweglich, insbesondere zumindest anteilig in eine zur Rollachse und/oder zur Nickachse parallele Richtung verschieblich angeordnet. Insbesondere ist das Ableitelement als im Betrieb nicht umlaufendes Leitblech ausgebildet, das zur schwerkraftgestützten Ableitung aus dem Fördergut getrennter Bestandteile dient. Durch eine Bewegung des Ableitelementes in Abhängigkeit von den Neigungsdaten lässt sich wiederrum auf unterschiedliche Flugkurven der Fördergutbestandteile reagieren. Insbesondere lässt sich vermeiden, dass Bestandteile, die von einem Trennelement zur Trennung erfasst wurden, daraufhin aufgrund der Neigung an dem Ableitelement vorbeifallen oder dass nicht zu trennende Bestandteile aufgrund der Neigung unbeabsichtigt auf das Ableitelement fallen. Durch die bevorzugte Richtung der Beweglichkeit parallel zur Rollachse oder in Richtung der Rollachse, lässt sich insbesondere auch Neigungen der Hackfruchterntemaschine um die Nickachse reagieren.

Alternativ oder zusätzlich ist das Ableitelement im Betrieb umlaufend ausgebildet. Insbesondere handelt es sich um eine im Betrieb umlaufende Rolle oder ein im Betrieb umlaufendes Band. Bevorzugt weist die Hackfruchterntemaschine ein am im Betrieb umlaufenden Ableitelement anliegendes oder geringfügig vom im Betrieb umlaufenden Ableitelement beabstandetes und zum Maschinenrahmen insbesondere ortsfestes Abstreifelement auf. Das Abstreifelement ist zum Abstreifen von unerwünschten, am Abstreifelement anhaftenden Beimengen ausgebildet. Durch die Ausbildung des Ableitelementes als im Betrieb umlaufend lassen sich die Hackfrüchte schonender und zielgerichteter leiten.

Besonders bevorzugt weist die Hackfruchterntemaschine zwei weitere Fördervorrichtungen stromabwärts der Trennvorrichtung auf, von denen eine zur Abförderung der Hackfrüchte und eine zur Abförderung der Beimengen ausgebildet ist. Insbesondere sind die Fördervorrichtungen im Betrieb gegensinnig umlaufend. Das Ableitelement wird bevorzugt durch zumindest eine der weiteren Fördervorrichtungen ausgebildet. Zumindest diese eine weitere Fördervorrichtung ist insbesondere zumindest anteilig, insbesondere ausschließlich in seine Förderrichtung und/oder horizontal verschieblich, um auf Neigungen und die sich damit verschiebenden Bereiche, in denen Hackfrüchte und Beimengen auf den weiteren Fördervorrichtungen auftreffen, reagieren zu können. In diesem Fall übernimmt die zumindest eine weitere Fördervorrichtung gleichzeitig eine Trenn- und eine Förderfunktion.

Bevorzugt ist die EDV-Regeleinheit zur Einstellung einer Fördergeschwindigkeit der Zufördervorrichtung in Abhängigkeit von den Neigungsdaten ausgebildet. Durch eine Erhöhung bzw. Verringerung der Fördergeschwindigkeit der Zufördervorrichtung in die Zuförderrichtung lässt sich im Falle einer festgestellten Neigung der Hackfruchterntemaschine und einer damit einhergehenden veränderten Flugkurve der Fördergutbestandteile eben jene Flugkurve wieder ändern. Insbesondere lassen sich neigungsinduzierte Änderungen der Flugkurve durch die Anpassung der Fördergeschwindigkeit zumindest weitgehend ausgleichen. Dazu ist die EDV-Regeleinheit insbesondere mit einem Antriebselement der Zufördervorrichtung gekoppelt und stellt dessen Drehzahl im Betrieb ein.

Vorzugsweise ist die EDV-Regeleinheit zur Einstellung eines an der Zufördervorrichtung angeordneten Zuförderstellelementes in Abhängigkeit von den Neigungsdaten ausgebildet. Von der Zufördervorrichtung ist insbesondere wenigstens ein den Trennelementen zugewandtes Ende relativ zur Trennvorrichtung zumindest anteilig vertikal beweglich. Insbesondere ist das Zuförderstellelement im Bereich diesen Endes an der Zufördervorrichtung angeordnet. Durch eine Anpassung der Höhe der Zufördervorrichtung, von der das Fördergut in den Bereich der Fallstufe gelangt, lässt sich wiederum verhindern, dass das Fördergut unbeabsichtigt von den Trennelementen erfasst wird und Fördergutbestandteile gleichwohl zuverlässig vom restlichen Fördergut durch die Trennelemente trennbar bleiben.

Bevorzugt grenzt eine Auflagefläche der Zufördervorrichtung an zwei gedachte Begrenzungsebenen an, die sich flächig sowohl in die Zufördervorrichtung als auch in eine vertikale Richtung erstrecken. Die in Zufördervorrichtung betrachtet äußersten Trennelemente sind zumindest anteilig außerhalb des Raumes zwischen den Begrenzungsebenen angeordnet. Insbesondere ist auf jeder Seite der Zufördervorrichtung zumindest ein gesamtes Trennelement außerhalb des Raumes angeordnet, bevorzugt ist beidseitig eine Mehrzahl von Trennelementen außerhalb des Raumes angeordnet. Damit übersteigt die Erstreckung der Trennvorrichtung in Querrichtung die Erstreckung der Auflagefläche in Querrichtung. Durch diese Ausbildung der Trennvorrichtung können Fördergutbestandteile von der Trennvorrichtung selbst dann aus dem restlichen Fördergut getrennt werden, wenn sie aufgrund einer Neigung insbesondere um die Rollachse seitlich von der Zufördervorrichtung im Bereich der Fallstufe fallen.

Vorzugsweise ist die EDV-Auswerteeinheit so ausgebildet, dass die Auswahl des einzustellenden Trennelementes in Abhängigkeit von den Neigungsdaten, insbesondere von denen eine Neigung um die Rollachse oder um die Zuförderrichtung repräsentierenden Neigungsdaten, erfolgt. Damit hängt die Betätigung der Trennelemente sowohl von den Fördergutdaten als auch von den Neigungsdaten ab. Dadurch lässt sich die Betätigung der Trennelemente auf eine breitere Datenbasis stützen und die Trennvorrichtung noch zielgenauer einrichten.

Besonders bevorzugt ist die EDV-Auswerteeinheit so ausgebildet, dass sie bei Empfangen von ersten Neigungsdaten, die eine erste, einen Neigungsschwellwert nicht übersteigende Neigung repräsentieren, und von ersten Fördergutdaten ein erstes Trennelement betätigt, wobei die EDV-Auswerteeinheit bei Empfangen von weiteren Neigungsdaten, die eine weitere, den Neigungsschwellwert übersteigende Neigung repräsentieren, und den ersten Fördergutdaten einen zum ersten Trennelement benachbart angeordnetes Trennelement betätigt. Das bedeuten, dass die EDV-Auswerteeinheit zunächst auf Basis der Fördergutdaten insbesondere auch Basis eines identifizierten Beimengenbestandteils, ein zu dessen Trennung einzusetzendes Trennelement ermittelt, wobei von einer horizontalen Ausrichtung der Hackfruchterntemaschine ausgegangen wird. Daraufhin verarbeitet die EDV-Auswerteeinheit die Neigungsdaten derart, dass sie bei Überschreiten eines (positiven) Neigungsschwellwertes und Unterschreiten eines (negativen) weiteren Neigungsschwellwertes ausgehend von auf Basis der Fördergutdaten ausgewählten Trennelement ein dazu (in die eine oder andere Richtung) benachbartes Trennelement oder bei größerer Steigung ein entfernteres Trennelement zur Betätigung auswählt. Hierdurch lässt sich unter Verhinderung zusätzlichen konstruktiven Aufwandes betreffend die Breite bzw. Lagerung der Trennvorrichtung erreichen, dass diese auch bei einer Neigung insbesondere um die Rollachse zu trennende Bestandteile präzise aus dem Fördergut trennt. Insbesondere ist die EDV-Auswerteeinheit auch zur vorbeschriebenen und neigungsbasierten Einstellung des Fahrwerk- bzw. Deichsel- oder Trennvorrichtungsstellelementes ausgebildet. Auf diese Weise kann die Neigung im Bereich der Trennvorrichtung durch eines oder mehrere der Stellelemente zumindest soweit geändert werden, dass die verbleibende Neigung eine Änderung des zu betätigenden Trennelementes um ein ganzes Vielfaches rechtfertigt.

Die Aufgabe wird weiterhin gelöst durch ein computerimplementiertes Verfahren unter Nutzung der vor- und/oder nachbeschriebenen Hackfruchterntemaschine. Dem Verfahren zufolge werden zunächst Fördergutdaten durch den Fördergutsensor aufgenommen sowie Neigungsdaten durch den Neigungssensor aufgenommen. Anschließend wird zumindest ein Stellsignal in Abhängigkeit von den Neigungsdaten und/oder in Abhängigkeit von den Fördergutdaten durch die EDV-Auswerteeinheit und/oder die EDV-Regeleinheit berechnet. Anschließend wird zumindest eines der Fluidstellelemente und/oder zumindest eines der Auswerferstellelemente betätigt und/oder das Deichselstellelement, das Fahrwerkstellelement, das Zuförderstellelement, das Ableitstellelement und/oder das Trennvorrichtungsstellelement durch das Stellsignal eingestellt.

Weitere Einzelheiten und Vorteile der Erfindung sind den nachfolgend beschriebenen, schematisch dargestellten Ausführungsbeispielen zu entnehmen; es zeigen:
- Fig. 1: eine schematisch dargestellte Seitenansicht eines Teils einer ersten erfindungsgemäßen Hackfruchterntemaschine,
- Fig. 2: eine schematisch dargestellte Seitenansicht eines Teils einer zweiten erfindungsgemäßen Hackfruchterntemaschine in einer ersten Konfiguration,
- Fig. 3: eine schematisch dargestellte Seitenansicht des Teils der zweiten erfindungsgemäßen Hackfruchterntemaschine in einer zweiten Konfiguration,
- Fig. 4: eine schematisch dargestellte Seitenansicht des Teils des zweiten erfindungsgemäßen Hackfruchterntemaschine in einer dritten Konfiguration,
- Fig. 5: eine schematisch dargestellte Draufsicht eines Teils einer dritten erfindungsgemäßen Hackfruchterntemaschine,
- Fig. 6: eine schematisch dargestellte Draufsicht eines Teils einer vierten erfindungsgemäßen Hackfruchterntemaschine in einer ersten Konfiguration,
- Fig. 7: eine schematisch dargestellte Draufsicht des Teils der vierten erfindungsgemäßen Hackfruchterntemaschine in einer zweiten Konfiguration,
- Fig. 8: eine schematisch dargestellte Draufsicht eines Teils einer fünften erfindungsgemäßen Hackfruchterntemaschine,
- Fig. 9: eine perspektivische Gesamtdarstellung einer sechsten erfindungsgemäßen Hackfruchterntemaschine.

Die nachfolgend erläuterten Merkmale der erfindungsgemäßen Ausführungsbeispiele könnten auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

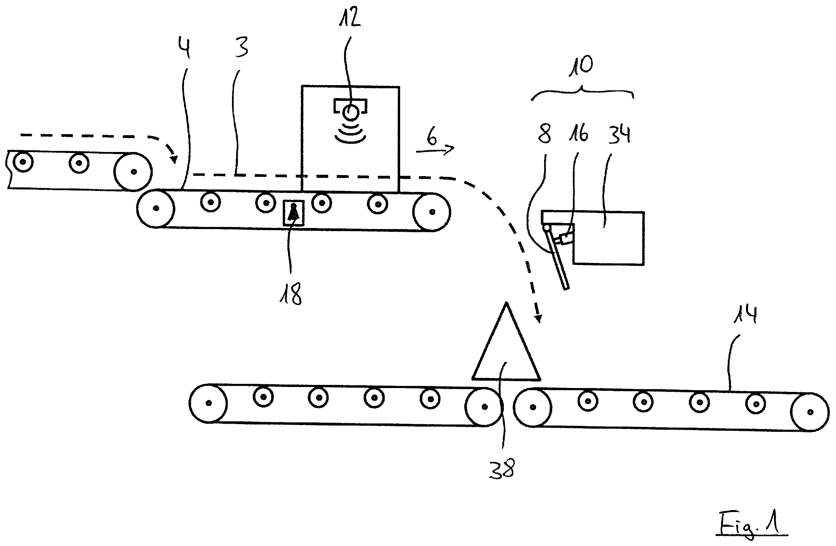

Die Fig. 1 bis 8 zeigen zumindest eine Zuführvorrichtung 4 und eine Trennvorrichtung 10 unterschiedlicher erfindungsgemäßer Hackfruchterntemaschinen 2. Durch die Zufördervorrichtung 4 wird Fördergut aus Erntegut und Beimengen in die Zuförderrichtung 6 gefördert. Das Fördergut beschreibt dadurch im Wesentlichen den Förderweg 3. Oberhalb der Zufördervorrichtung 4 ist ein Fördergutsensor 12 zur Aufnahme von Fördergutdaten angeordnet, die im Betrieb an eine nicht dargestellte EDV-Auswerteeinheit übermittelt werden. An der Zufördervorrichtung 4 ist außerdem ein Neigungssensor 18 angeordnet.

Bezogen auf den Förderweg 3 ist die Trennvorrichtung 10 der Zufördervorrichtung 4 nachgeordnet. Die Trennvorrichtung 10 umfasst eine Mehrzahl von Trennelementen 8, die in der in den Fig. 1 bis 4 vorhandenen Perspektive hintereinander angeordnet sind, weshalb je nur ein Trennelement 8 dargestellt ist. Die Trennelemente 8 sind schwenkbeweglich an einem Trennvorrichtungsrahmen 34 angeordnet. Die Trennelemente 8 sind außerdem durch ein Auswerferstellelement 16 von einer Ruhestellung, in der die Trennelemente 8 gezeigt sind, in eine Auswerfstellung überführbar, wozu sie in Richtung des Förderweges 3 verschwenkt werden.

Unterhalb der Trennvorrichtung 10 ist ein Ableitelement 38 angeordnet (vgl. Fig. 1). Das Erntegut hat im Betrieb auf die rechte Seite des Abstreifelementes 38 zu fallen, um von der weiteren Fördervorrichtung 14 abgefördert werden zu können. Durch die Trennelemente vom Erntegut getrennte bzw. ausgeworfene Beimengenbestandteile haben links der Spitze des Abstreifelementes 38 auf eben jenes Abstreifelement 38 oder das linker Hand davon gezeigte Förderband zu fallen.

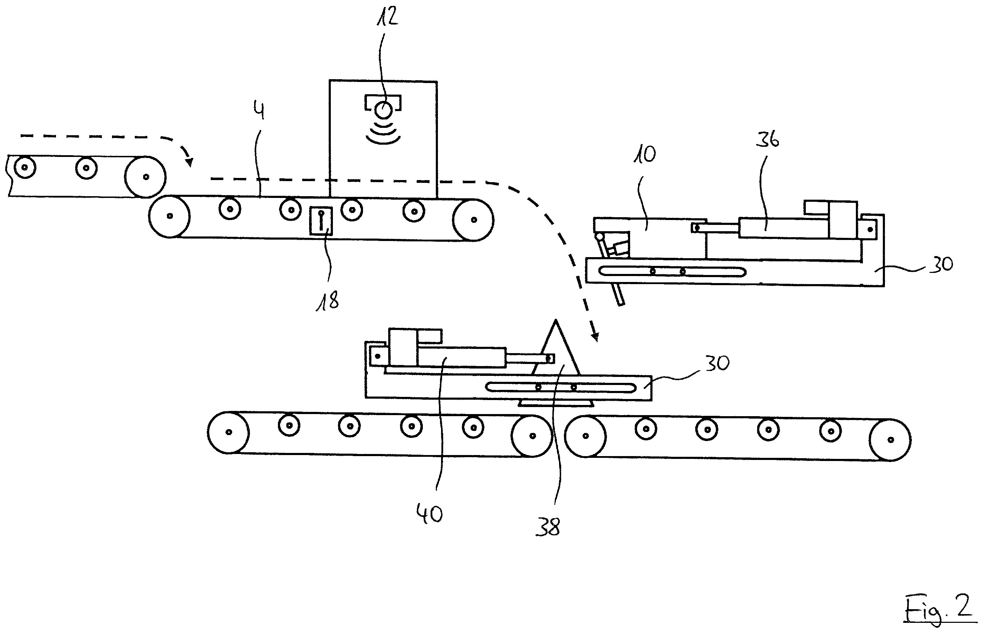

Die Figuren 2 bis 4 zeigen die vorgenannten Bestandteile in einer zweiten erfindungsgemäßen Hackfruchterntemaschine 2. In der zweiten Hackfruchterntemaschine 2 ist sowohl die Trennvorrichtung 10 als auch das Ableitelement 38 in die Zuförderrichtung 6 verschieblich gelagert. Das Ableitelement 38 ist durch ein Langloch im Maschinenrahmen 30 verschieblich dazu und lässt sich durch ein Ableitstellelement 40 einstellen. Auf die gleiche Weise lässt sich die Trennvorrichtung 10 durch ein Trennvorrichtungsstellelement 36 relativ zum Maschinenrahmen 30 einstellen. Beide Einstellungen werden durch die EDV-Auswerteeinheit oder die EDV-Regeleinheit in Abhängigkeit der mit dem Neigungssensor aufgenommenen Neigung vorgegeben.

In Fig. 2 befinden sich sowohl die Trennvorrichtung 10 als auch das Ableitelement 38 in einer Ausgangsstellung, da durch den Neigungssensor 18, der hier eine potentielle Neigung um die Nickachse misst, keine Neigung der Hackfruchterntemaschine bzw. der Zufördervorrichtung 4 gegenüber einer Horizontalen gemessen wird.

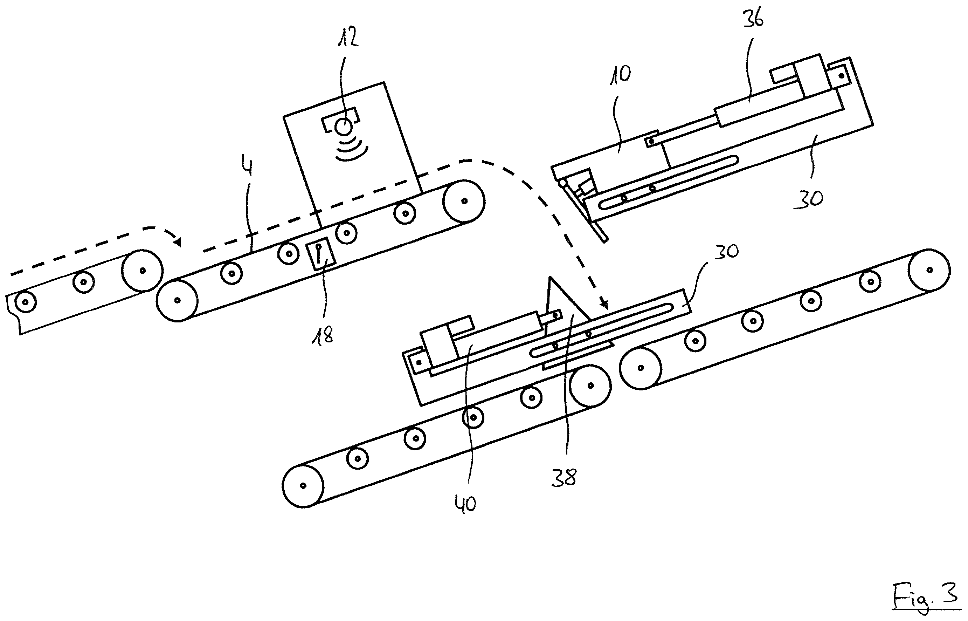

In Fig. 3 wird durch den Neigungssensor 18 eine Neigung der Erntemaschine 2 entgegen dem Uhrzeigersinn gegenüber der Horizontalen gemessen, weshalb sich der Förderweg 3 des Fördergutes verändert und das Fördergut insbesondere steiler von der Fördervorrichtung 4 hinabfällt. Entsprechend sind die Trennvorrichtung 10 und das Ableitelement 38 von dem Trennvorrichtungsstellelement 36 und dem Ableitstellelement 40 gegenüber ihrer Ausgangsstellung in Fig. 2 nach links verschoben.

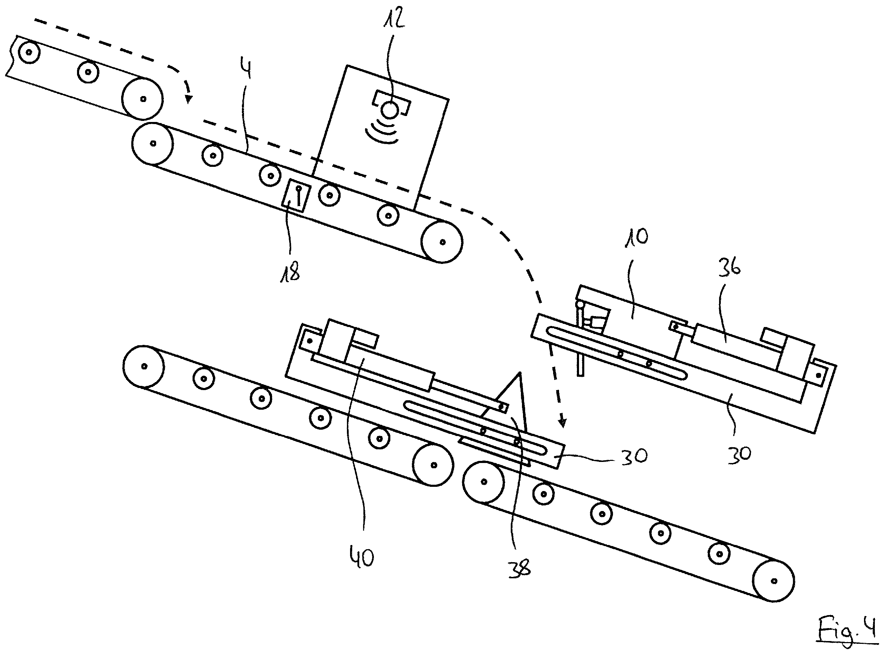

Fig. 4 zeigt die Konfiguration der genannten Teile der zweiten erfindungsgemäßen Hackfruchterntemaschine bei einer entgegengesetzten Neigung. Hier sind das Ableitelement 38 und die Trennvorrichtung 10 gegenüber ihrer Stellung in Fig. 2 nach rechts verschoben, um auf die nun flachere Flugkurve im Förderweg 3 zu reagieren.

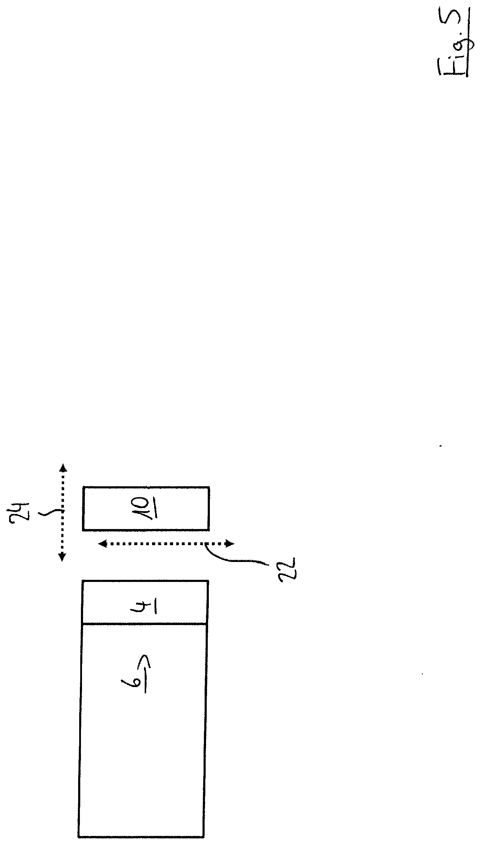

Die schematisch in Fig. 5 gezeigte dritte Ausführungsform der erfindungsgemäßen Hackfruchterntemaschine zeigt eine Trennvorrichtung 10, die sowohl entlang einer Rollachse 24, die parallel zur Zuförderrichtung 6 ist, als auch entlang einer Nickachse 22 verschieblich gegenüber dem Maschinenrahmen 30 und gegenüber der Zufördervorrichtung 4 gelagert ist.

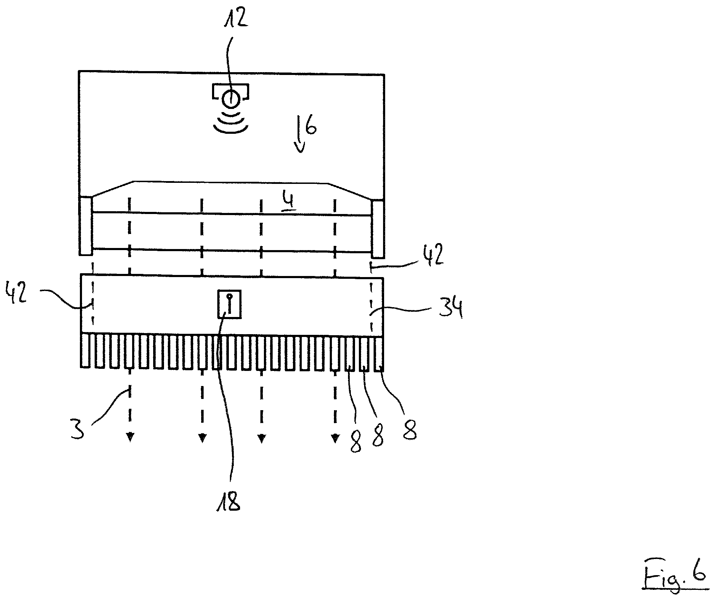

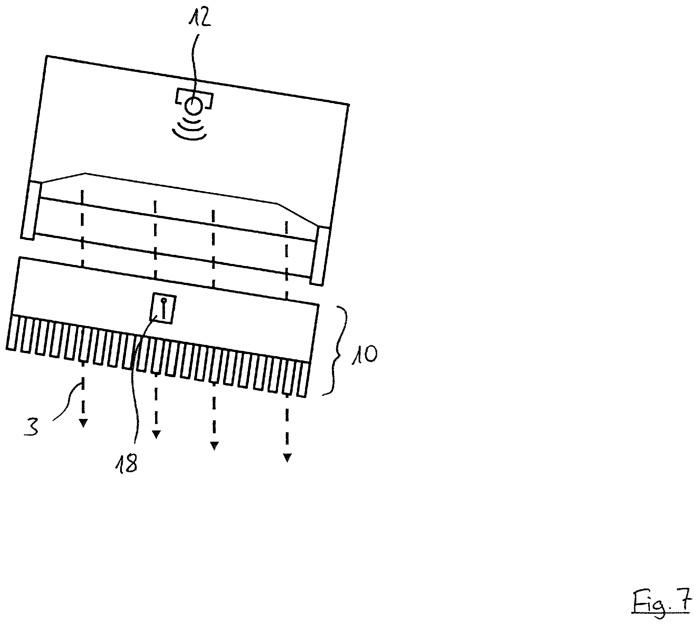

Die Figuren 6 und 7 zeigen einen Teil einer vierten erfindungsgemäßen Hackfruchterntemaschine, deren Neigungssensor 18 eine Neigung misst, die zumindest anteilig um die Rollachse 24 erfolgt, die parallel zu Zuförderrichtung 6 verläuft. Die äußerten Trennelemente 8 sind dabei außerhalb des durch die Begrenzungsebenen 42 aufgespannten Zwischenraumes angeordnet, wobei die Begrenzungsebenen 42 an die Seiten einer Auflagefläche der Zufördervorrichtung 4 angrenzen.

In der Betriebssituation gemäß Fig. 6 wird keine Neigung der Hackfruchterntemaschine 2 gemessen und verlaufen die Förderwege 3 entsprechend geradlinig in die Zuförderrichtung 6 an der Trennvorrichtung 10 entlang. Fig. 7 verdeutlicht, inwiefern eine durch den Neigungssensor 18 gemessene Neigung zu Förderwegen 3 führt, die anteilig quer zur Zuförderrichtung 6 verlaufen. Zur Berücksichtigung dieses Verlaufs hängt die Auswahl der zu betätigenden Trennelemente 8 in dieser Ausführungsform von der gemessenen Neigung ab, so dass etwa in Fig. 7, gleiche Fördergutdaten in den Betriebssituationen gemäß den Fig. 6 und Fig. 7 vorausgesetzt, andere Trennelemente betätigt werden als in Fig. 6.

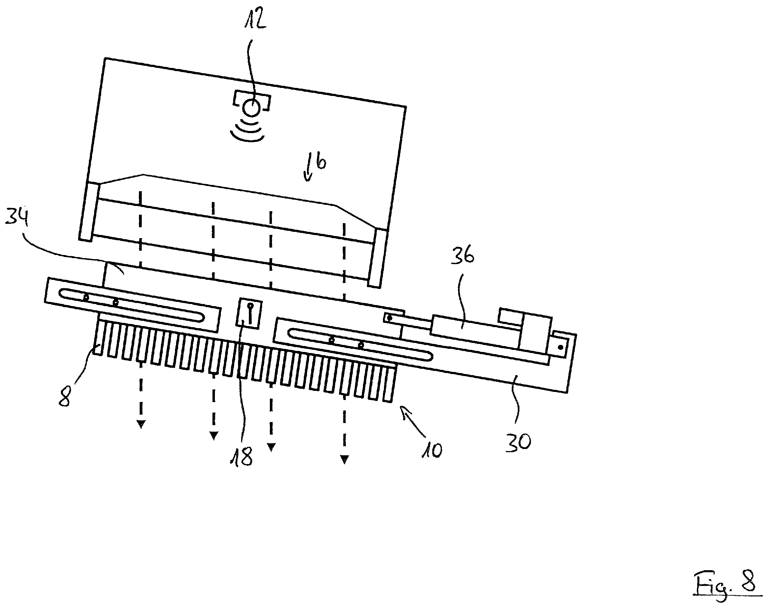

Fig. 8 zeigt eine ähnliche Darstellung wie die Figuren 6 und 7, wobei hier die Trennvorrichtung 10 quer zur Zuförderrichtung 6 verschieblich relativ zum Maschinenrahmen 30 gelagert ist. An dem Trennvorrichtungsrahmen 34 ist wiederum ein Trennvorrichtungsstellelement 36 angeordnet, wodurch die Trennvorrichtung 10 relativ zu einem Maschinenrand 30 verschiebbar ist. In der gezeigten Ausführungsform reagiert die Hackfruchterntemaschine 2 bzw. die Trennvorrichtung 10 derart auf eine vom Neigungssensor 18 festgestellte Neigung, dass die Trennvorrichtung seitlich verschoben wird, so dass bei Fördergutdaten, die mit denen in der Betriebssituation gemäß Fig. 6 übereinstimmen, auch dieselben Förderelemente 8 betätigt werden, die jedoch verschoben positioniert sind.

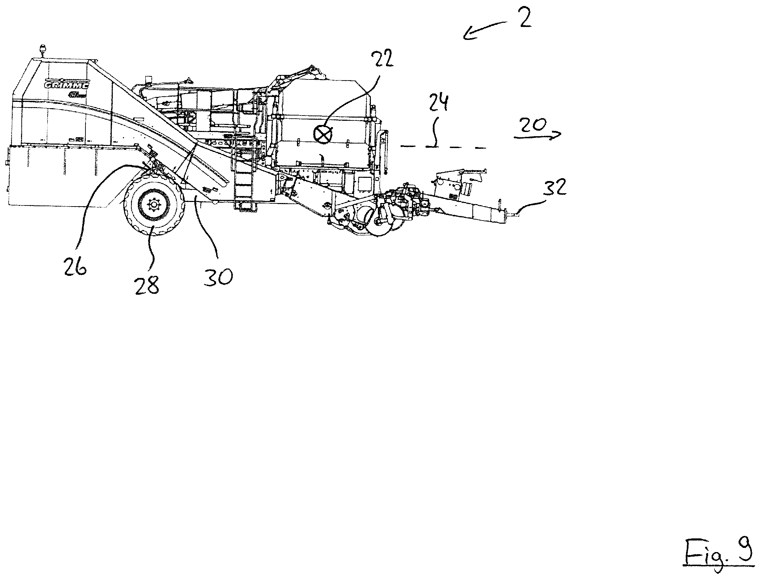

Fig. 9 zeigt eine erfindungsgemäße Hackfruchterntemaschine 2 in einer Seitenansicht. Die Hackfruchterntemaschine 2 ist durch das Kupplungselement 32 mit einer Zugmaschine koppelbar und bewegt sich im Betrieb in die Fahrtrichtung 20 fort. Die Hackfruchterntemaschine 2 verfügt über Neigungssensoren sowohl zur Messung einer Neigung der Hackfruchterntemaschine 2 um die Rollachse 24 als auch zur Messung einer Neigung um die Nickachse 22. Die Neigungssensoren 18 sind ebenso wie die Trennvorrichtung 10 in der gegebenen Darstellung nicht sichtbar. Im Bereich der Aufhängung des als Rad ausgebildeten Fahrwerkelementes 28 hat die Hackfruchterntemaschine 2 ein Fahrwerksstellelement 26, durch das das Fahrwerkelement 28 mit dem Maschinenrahmen 30 gekoppelt ist.

## Patentansprüche

1. Hackfruchterntemaschine (2), umfassend eine Zufördervorrichtung (4) zur Förderung von Fördergut aus Erntegut und Beimengen in eine Zuförderrichtung (6) und umfassend eine zumindest ein Trennelement (8) aufweisende Trennvorrichtung (10) zum Trennen der Beimengen vom Erntegut, die einen mit einer EDV-Auswerteeinheit gekoppelten und im Betrieb auf das Fördergut, insbesondere auf die Zufördervorrichtung (4), gerichteten, insbesondere optischen Fördergutsensor (12) zur Aufnahme von Fördergutdaten umfasst, **dadurch gekennzeichnet, dass** die Trennvorrichtung (10) mehrere, in Zuförderrichtung (6) betrachtet zumindest teilweise nebeneinander angeordnete Trennelemente (8) umfasst, die von der EDV-Auswerteeinheit in Abhängigkeit von den Fördergutdaten einzeln betätigbar sind.

2. Hackfruchterntemaschine (2) nach Anspruch 1, **dadurch gekennzeichnet, dass** die Trennvorrichtung (10) bezogen auf die Zufördervorrichtung (4) stromabwärts angeordnet ist und insbesondere bezüglich einer sich an die Zufördervorrichtung (4) anschließenden, weiteren Fördervorrichtung (14) stromaufwärts angeordnet ist.

3. Hackfruchterntemaschine (2) nach einem der vorhergehenden Ansprüche, **dadurch gekennzeichnet, dass** die Trennelemente (8) von einer Ruhestellung in eine Auswerfstellung und zurück beweglich, insbesondere schwenkbar an einem Trennvorrichtungsrahmen (34) angeordnet sind und jedem Trennelement (8) zumindest ein Auswerferstellelement (16) zugeordnet ist.

4. Hackfruchterntemaschine (2) nach einem der vorhergehenden Ansprüche, **dadurch gekennzeichnet, dass** die Trennelemente (8) jeweils zumindest eine Fluidauslassöffnung ausbilden und insbesondere jeweils ein betätigbares Fluidstellelement haben.

5. Hackfruchterntemaschine (2) nach einem der vorhergehenden Ansprüche, **gekennzeichnet durch** zumindest einen insbesondere von der Trennvorrichtung (10) umfassten Neigungssensor (18), der zur Messung einer Neigung der Hackfruchterntemaschine (2) bzw. der Trennvorrichtung (10) und/oder des Zuförderelementes (4), und zur Ausgabe von Neigungsdaten an eine mit dem Neigungssensor (18) gekoppelte, EDV-Regeleinheit ausgebildet ist.

6. Hackfruchterntemaschine (2) nach Anspruch 5, **dadurch gekennzeichnet, dass** der zumindest eine Neigungssensor (18) zur Messung einer Neigung um eine quer zur Fahrtrichtung (20) orientierte Nickachse (22) und/oder zur Messung einer Neigung um eine in Fahrtrichtung (20) orientierte Rollachse (24) ausgebildet ist.

7. Hackfruchterntemaschine (2) nach Anspruch 5 oder 6, **dadurch gekennzeichnet, dass** die EDV-Regeleinheit zur Einstellung zumindest eines Fahrwerkstellelementes (26), das zur Verstellung zumindest eines Fahrwerkelementes (28) relativ zu einem Maschinenrahmen (30) ausgebildet ist, in Abhängigkeit von den Neigungsdaten ausgebildet ist.

8. Hackfruchterntemaschine (2) nach einem der Ansprüche 5 bis 7, **dadurch gekennzeichnet, dass** die EDV-Regeleinheit zur Einstellung zumindest eines Deichselstellelementes, das zur Verstellung eines zum Kuppeln der Hackfruchterntemaschine (2) mit einer Zugmaschine angeordneten Kupplungselementes (32) relativ zum Maschinenrahmen (30) ausgebildet ist, in Abhängigkeit von den Neigungsdaten ausgebildet ist.

9. Hackfruchterntemaschine (2) nach einem der Ansprüche 5 bis 8, **dadurch gekennzeichnet, dass** die EDV-Regeleinheit zur Einstellung zumindest eines an der Trennvorrichtung (10), insbesondere an dem Trennvorrichtungsrahmen (34) der Trennvorrichtung (10), angeordneten Trennvorrichtungsstellelementes (36) in Abhängigkeit von den Neigungsdaten ausgebildet ist, wobei zumindest der Trennvorrichtungsrahmen (34) relativ zum Maschinenrahmen (30) beweglich gelagert ist.

10. Hackfruchterntemaschine (2) nach Anspruch 9, **dadurch gekennzeichnet, dass** der Trennvorrichtungsrahmen (34) zumindest anteilig schwenkbeweglich am Maschinenrahmen (30) angeordnet ist, wobei der Trennvorrichtungsrahmen (34) derart mit der Zufördervorrichtung (4) gekoppelt ist, dass ein Verschwenken des Trennvorrichtungsrahmens (34) relativ zu einem Zufördervorrichtungsrahmen der Zufördervorrichtung (4) um die Rollachse (24), insbesondere um jede Schwenkachse, verhindert ist.

11. Hackfruchterntemaschine (2) nach Anspruch 9 oder 10, **dadurch gekennzeichnet, dass** der Trennvorrichtungsrahmen (34) relativ zum Zufördervorrichtungsrahmen beweglich gelagert ist.

12. Hackfruchterntemaschine (2) nach Anspruch 11, **dadurch gekennzeichnet, dass** der Trennvorrichtungsrahmen (34) relativ zum Zufördervorrichtungsrahmen zumindest anteilig in eine zur Nickachse (22) parallele Richtung translatorisch beweglich, insbesondere verschieblich gelagert ist.

13. Hackfruchterntemaschine (2) nach Anspruch 11 oder 12, **dadurch gekennzeichnet, dass** der Trennvorrichtungsrahmen (34) relativ zum Zufördervorrichtungsrahmen zumindest anteilig in eine zur Rollachse (24) parallele Richtung, in die Zuförderrichtung (6) und/oder vertikal translatorisch beweglich, insbesondere verschieblich gelagert ist.

14. Hackfruchterntemaschine (2) nach einem der Ansprüche 11 bis 13, **dadurch gekennzeichnet, dass** der Trennvorrichtungsrahmen (34) relativ zum Zufördervorrichtungsrahmen zumindest anteilig um eine zur Nickachse (22) parallele Schwenkachse schwenkbar gelagert ist.

15. Hackfruchterntemaschine (2) nach einem der Ansprüche 5 bis 14, **dadurch gekennzeichnet, dass** die EDV-Regeleinheit zur Einstellung zumindest eines an einem Ableitelement (38) zum Ableiten aussortierter Beimengen von der Trennvorrichtung (10), das unterhalb der Trennelemente (8) und relativ zum Maschinenrahmen (30) beweglich, insbesondere zumindest anteilig in eine zur Rollachse (24) parallele Richtung verschieblich angeordnet ist, angeordneten Ableitstellelementes (40) in Abhängigkeit von den Neigungsdaten ausgebildet ist.

16. Hackfruchterntemaschine (2) nach Anspruch 15, **dadurch gekennzeichnet, dass** das Ableitelement (38) als im Betrieb umlaufend, insbesondere als im Betrieb rotierende Rolle oder als im Betrieb umlaufendes Band, ausgebildet ist, das bevorzugt zur Abförderung der aussortierten Beimengen umlaufend ausgebildet ist.

17. Hackfruchterntemaschine (2) nach einem der Ansprüche 5 bis 16, **dadurch gekennzeichnet, dass** die EDV-Regeleinheit zur Einstellung einer Fördergeschwindigkeit der Zufördervorrichtung (4) in Abhängigkeit von den Neigungsdaten ausgebildet ist.

18. Hackfruchterntemaschine (2) nach einem der Ansprüche 5 bis 17, **dadurch gekennzeichnet, dass** die EDV-Regeleinheit zur Einstellung eines an der Zufördervorrichtung (4), von der wenigstens ein den Trennelementen zugewandtes Ende relativ zur Trennvorrichtung (10) zumindest anteilig vertikal beweglich ist, angeordneten Zuförderstellelementes in Abhängigkeit von den Neigungsdaten ausgebildet ist.

19. Hackfruchterntemaschine (2) nach einem der vorhergehenden Ansprüche, **dadurch gekennzeichnet, dass** eine Auflagefläche (5) der Zufördervorrichtung (4) an zwei sich in Zuförderrichtung und vertikal erstreckenden Begrenzungsebenen (42) angrenzt, wobei die in Zuförderrichtung (6) betrachtet äußersten Trennelemente (8) zumindest anteilig außerhalb des Raumes zwischen den Begrenzungsebenen (42) angeordnet sind.

20. Hackfruchterntemaschine (2) nach einem der Ansprüche 5 bis 19, **dadurch gekennzeichnet, dass** die EDV-Auswerteeinheit so ausgebildet ist, dass die Auswahl des einzustellenden Trennelementes (8) in Abhängigkeit von den Neigungsdaten, insbesondere von den eine Neigung um die Rollachse (24) oder um die Zuförderrichtung (6) repräsentierenden Neigungsdaten, erfolgt.

21. Hackfruchterntemaschine (2) nach Anspruch 20, **dadurch gekennzeichnet, dass** die EDV-Auswerteeinheit so ausgebildet ist, dass sie bei Empfang von ersten Neigungsdaten, die eine erste, einen Neigungsschwellwert nicht übersteigende Neigung repräsentieren, und von ersten Fördergutdaten ein erstes Trennelement (8) betätigt, wobei die EDV-Auswerteeinheit bei Empfang von weiteren Neigungsdaten, die eine weitere, den Neigungsschwellwert übersteigende Neigung repräsentieren, und den ersten Fördergutdaten ein zum ersten Trennelement (8) benachbart angeordnetes Trennelement betätigt.

22. Computerimplementiertes Verfahren unter Nutzung einer Hackfruchterntemaschine (2) nach einem der vorhergehenden Ansprüche, umfassend die Schritte:
- Aufnehmen von Fördergutdaten durch den Fördergutsensor (12),
- Aufnehmen von Neigungsdaten durch den Neigungssensor (18),
- Berechnung zumindest eines Stellsignals in Abhängigkeit von den Neigungsdaten und/oder in Abhängigkeit von den Fördergutdaten durch die EDV-Auswerteeinheit und/oder die EDV-Regeleinheit,
- Betätigung zumindest eines der Fluidstellelemente und/oder zumindest eines der Auswerferstellelemente (16) und/oder Einstellung des Deichselstellelementes, des Fahrwerkstellelementes (26), des Zuförderstellelementes, des Ableitstellelementes (40) und/oder des Trennvorrichtungsstellelementes (36) durch das Stellsignal.
